(19) Europäisches Patentamt
European Patent Office
Office européen des brevets

(11) **EP 4 455 369 A1**

(12) **EUROPEAN PATENT APPLICATION**
published in accordance with Art. 153(4) EPC

(43) Date of publication:
**30.10.2024 Bulletin 2024/44**

(21) Application number: **22910457.5**

(22) Date of filing: **25.08.2022**

(51) International Patent Classification (IPC):
*C25B 11/032* (2021.01)   *C25B 1/04* (2021.01)
*C25B 9/00* (2021.01)   *C25B 9/23* (2021.01)
*C25B 11/03* (2021.01)   *C25B 11/046* (2021.01)

(52) Cooperative Patent Classification (CPC):
**C25B 1/04; C25B 9/00; C25B 9/23; C25B 11/03; C25B 11/032; C25B 11/046;** Y02E 60/36

(86) International application number:
**PCT/JP2022/031982**

(87) International publication number:
**WO 2023/119730 (29.06.2023 Gazette 2023/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.12.2021  JP 2021211157**

(71) Applicant: **SUMITOMO ELECTRIC INDUSTRIES, LTD.**
**Osaka-shi, Osaka 541-0041 (JP)**

(72) Inventors:
• **HIGASHINO, Takahiro**
  **Osaka-shi, Osaka 541-0041 (JP)**
• **OKUNO, Kazuki**
  **Osaka-shi, Osaka 541-0041 (JP)**
• **TAWARAYAMA, Hiromasa**
  **Osaka-shi, Osaka 541-0041 (JP)**
• **HOSOE, Akihisa**
  **Osaka-shi, Osaka 541-0041 (JP)**
• **OKUMURA, Soichiro**
  **Osaka-shi, Osaka 541-0041 (JP)**

(74) Representative: **Boult Wade Tennant LLP**
**Salisbury Square House**
**8 Salisbury Square**
**London EC4Y 8AP (GB)**

(54) **ELECTRODE AND WATER ELECTROLYSIS DEVICE**

(57)     This electrode is provided with: a metal porous sheet comprising a metal porous body having a skeleton of a three-dimensional mesh structure; and a plate-shaped metal support disposed on one main surface of the metal porous sheet. The one main surface has a plurality of machined holes that are formed perpendicular to the one main surface, and at least some of the plurality of machined holes are disposed at regular intervals. The metal support has a plurality of through-holes passing through both surfaces of the metal support, and at least some of the plurality of through-holes are disposed at regular intervals. The porous metal sheet and the metal support are disposed so that the center of each of the aforementioned some of the plurality of machined holes and the center of each of the aforementioned some of the plurality of through-holes are shifted in one direction in a plan view.

**FIG. 1**

**Description**

TECHNICAL FIELD

The present disclosure relates to an electrode and a water electrolysis apparatus. This application claims priority based on Japanese Patent Application No. 2021-211157 filed on December 24, 2021, the entire contents of which are incorporated herein by reference.

BACKGROUND ART

Patent Literature 1 (PTL 1: Japanese National Patent Publication No. 2005-536639) describes an electrode structure. The electrode structure described in PTL 1 uses a wire mesh. Patent Literature 2 (PTL 2: Japanese Examined Patent Publication No. S61-57397) describes an electrode for water electrolysis. A metal porous body having a three-dimensional network structure is used for the electrode for water electrolysis described in PTL 2. Patent Literature 3 (PTL 3: WO 2021/153406) discloses a metal porous-body sheet, an electrode using the same, and a water electrolysis apparatus. PTL 3 describes that a metal porous-body sheet having a skeleton of a three-dimensional network structure and having a plurality of holes in a main surface is used for the electrode.

CITATION LIST

PATENT LITERATURE

PTL 1: Japanese National Patent Publication No. 2005-536639
PTL 2: Japanese Examined Patent Publication No. S61-57397
PTL 3: WO 2021/153406

SUMMARY OF THE INVENTION

An electrode according to an aspect of the present disclosure includes a metal porous-body sheet formed of a metal porous body having a skeleton with a three-dimensional network structure and a metallic support body having a plate shape and disposed on one main surface of the metal porous-body sheet. The one main surface has a plurality of machined holes each formed perpendicularly to the one main surface, and at least some of the plurality of machined holes are disposed at equal intervals. The metallic support body has a plurality of through holes extending between two surfaces of the metallic support body, and at least some of the plurality of through holes are disposed at equal intervals. The metal porous-body sheet and the metallic support body are disposed such that a center of each of the some of the plurality of machined holes and a center of each of the some of the plurality of through holes are shifted from each other in one direction in plan view.

BRIEF DESCRIPTION OF THE DRAWINGS

FIG. 1 is a schematic plan view of an example of an electrode 30 according to an embodiment of the present disclosure.
FIG. 2 is a schematic cross-sectional view of electrode 30 taken along line II-II in FIG. 1.
FIG. 3 is a schematic plan view of another example of electrode 30 according to the embodiment of the present disclosure.
FIG. 4 is a schematic view of an example of a metal porous-body sheet 10 used for electrode 30 according to the embodiment of the present disclosure.
FIG. 5 is a cross-sectional photograph of an example of metal porous-body sheet 10 used for electrode 30 according to the embodiment of the present disclosure.
FIG. 6 is a schematic view of an inner portion structure of an example of metal porous-body sheet 10 used for electrode 30 according to the embodiment of the present disclosure.
FIG. 7 is a schematic cross-sectional view of metal porous-body sheet 10 taken along line VII-VII in FIG. 6.
FIG. 8 is a schematic view showing a unit cell structure of a metal porous body defined by a skeleton 11 of metal porous-body sheet 10.
FIG. 9 is a schematic view showing an example of a structure of a metallic support body 20 which is made of an expand metal.

FIG. 10 is a schematic view showing another example of the structure of metallic support body 20 which is made of an expand metal.

FIG. 11 is a schematic view showing an example of the structure of metallic support body 20 which is made of a punching metal.

FIG. 12 is a schematic view showing another example of the structure of metallic support body 20 which is made of a punching metal.

FIG. 13 is a schematic view showing still another example of the structure of metallic support body 20 which is made of a punching metal.

FIG. 14 is a schematic view of an example of a water electrolysis apparatus 40 according to the embodiment of the present disclosure.

FIG. 15 is a schematic view of an example of a simplified water electrolysis apparatus 50 according to the embodiment of the present disclosure.

FIG. 16 shows simulation results of a gas volume fraction and an effective surface area ratio when water electrolysis is performed using various electrodes.

FIG. 17 is a schematic view showing a partial cross section of an example of electrode 30 in which center of each of machined holes 16 is shifted above center of each of through holes 21.

FIG. 18 is a schematic view showing a partial cross section of an example of electrode 30 in which the centers of machined holes 16 are aligned with the centers of through holes 21.

FIG. 19 is a schematic view showing a partial cross section of an example of electrode 30 in which the centers of machined holes 16 are shifted below the centers of through holes 21.

FIG. 20 is a graph showing IV characteristics (a vertical axis represents a cell voltage, and a horizontal axis represents a current density) when electrodes prepared in an example and comparative examples are used.

FIG. 21 is a graph showing an electrolysis voltage at a current density of 1000 mA/cm$^2$ when the electrodes prepared in the example and the comparative examples are used

FIG. 22 is a graph showing an electrolysis voltage at a current density of 600 mA/cm$^2$ when the electrodes prepared in the example and the comparative examples are used.

DETAILED DESCRIPTION

[Problems to be Solved by Present Disclosure]

The wire mesh used in the electrode structure described in PTL 1 has a small surface area. Thus, when the electrode structure described in PTL 1 is used for water electrolysis, an electrolysis voltage becomes high.

The metal porous body used in the electrode for water electrolysis described in PTL 2 has a large surface area. However, gas bubbles generated by water electrolysis are likely to adhere to the inner portion of the metal porous body used in the electrode for water electrolysis described in PTL 2. Since a portion to which the bubbles adhere does not contribute to the electrolytic reaction, the metal porous body used in the electrode for water electrolysis described in PTL 2 cannot reduce the electrolysis voltage during water electrolysis even when the surface area is large.

The metal porous-body sheet used in the electrode described in PTL 3 has a large surface area and a plurality of holes provided in the main surface, and thus, it is expected that the gas bubbles generated by water electrolysis are easily discharged to the outside. However, as a result of intensive research, the present inventors have found that, depending on a positional relationship of the metallic support body disposed on the main surface of the metal porous-body sheet, the bubbles generated by water electrolysis are sometimes difficult to be discharged from a pore portion of the metal porous-body sheet.

An object of the present disclosure is to provide an electrode that can easily discharge gas bubbles generated at the electrode during water electrolysis and reduce the electrolysis voltage, and a water electrolysis apparatus using the electrode.

[Advantageous Effects of Present Disclosure]

According to the present disclosure, it is possible to provide an electrode that can easily discharge gas bubbles generated at the electrode during water electrolysis and reduce the electrolysis voltage, and a water electrolysis apparatus using the electrode.

[Description of Embodiments of Present Disclosure]

First, embodiments of the present disclosure will be listed and described. (1) An electrode according to an aspect of the present disclosure includes a metal porous-body sheet formed of a metal porous body having a skeleton with a three-dimensional network structure and a metallic support body having a plate shape and disposed on one main surface of the metal porous-body sheet. The one main surface has a plurality of machined holes each formed perpendicularly to the one main surface, and at least some of the plurality of machined holes are disposed at equal intervals. The metallic support body has a plurality of through holes extending between two surfaces of the metallic support body, and at least some of the plurality of through holes are disposed at equal intervals. The metal porous-body sheet and the metallic support body are disposed such that a center of each of the some of the plurality of machined holes and a center of each of the some of the plurality of through holes are shifted from each other in one direction in plan view. According to the aspect of the disclosure described in the above (1), it is possible to provide an electrode that can easily discharge gas bubbles generated at the electrode during water electrolysis and thus reduce an electrolysis voltage.

(2) The electrode according to the above (1), a maximum diameter of the plurality of machined holes may be 0.5 mm to 3.5 mm. According to the aspect of the disclosure described in the above (2), it is possible to provide an electrode that can easily discharge gas bubbles generated at the electrode during water electrolysis.

(3) The electrode according to the above (1) or (2), the number of the plurality of machined holes may be 1/3 times to 4 times the number of the plurality of through holes. According to the aspect of the disclosure described in the above (3), it is possible to provide an electrode that can easily discharge gas bubbles generated at the electrode during water electrolysis.

(4) The electrode according to any one of the above (1) to (3), the plurality of machined holes of the metal porous-body sheet may extend through two surfaces of the metal porous-body sheet. According to the aspect of the disclosure described in the above (4), it is possible to provide an electrode that can more easily discharge gas bubbles generated at the electrode during water electrolysis and thus further reduce the electrolysis voltage.

(5) The electrode according to any one of the above (1) to (4), the metal porous-body sheet and the metallic support body may be disposed such that a center of each of all of the plurality of machined holes and a center of each of all of the plurality of through holes are shifted from each other in one direction in plan view. According to the aspect of the disclosure described in the above (5), it is possible to provide an electrode that can more easily discharge gas bubbles generated at the electrode during water electrolysis and thus further reduce the electrolysis voltage.

(6) The electrode according to any one of the above (1) to (5), a ratio of a sum of areas of the plurality of machined holes to a total area of main surface of metal porous-body sheet (a total area of main surface of metal porous-body sheet/a sum of areas of the plurality of machined holes $\times$ 100) may be 5% to 35%. According to the aspect of the disclosure described in the above (6), it is possible to provide an electrode that can easily discharge gas bubbles generated at the electrode during water electrolysis and has high reactivity.

(7) The electrode according to any one of the above (1) to (6), the metallic support body may be made of an expand metal or a punching metal. According to the aspect of the disclosure described in the above (7), it is possible to provide an electrode that can easily discharge gas bubbles generated at the electrode during water electrolysis.

(8) The electrode according to any one of the above (1) to (7), a surface of the metal porous-body sheet may be made of nickel or a nickel alloy. According to the aspect of the disclosure described in the above (8), it is possible to provide an electrode that has high reactivity in water electrolysis.

(9) The electrode according to any one of the above (1) to (8), a surface of the metallic support body may be made of nickel or a nickel alloy. According to the aspect of the disclosure described in the above (9), it is possible to provide an electrode that can easily discharge gas bubbles generated at the electrode during water electrolysis.

(10) A water electrolysis apparatus according to the embodiment of the present disclosure includes the electrode according to any one of the above (1) to (9). According to the aspect of the disclosure described in the above (10), it is possible to provide a water electrolysis apparatus that can easily discharge gas bubbles generated at the electrode during water electrolysis and reduce the electrolysis voltage.

(11) In the water electrolysis apparatus of an electrode according to the above (10), the metal porous-body sheet and the metallic support body may be disposed such that a center of each of the some of the plurality of machined holes is positioned above a center of each of the some of the plurality of through holes in a direction of gravity. According to the aspect of the disclosure described in the above (11), it is possible to provide a water electrolysis apparatus that can easily discharge gas bubbles generated at the electrode during water electrolysis and reduce the electrolysis voltage.

[Details of embodiments of present disclosure]

Specific examples of the electrode and the water electrolysis apparatus according to the embodiment of the present disclosure will be described in more detail below. The present disclosure is not limited to these examples, but is defined by the claims, and is intended to include all modifications within the meaning and scope equivalent to the claims.

<Electrode>

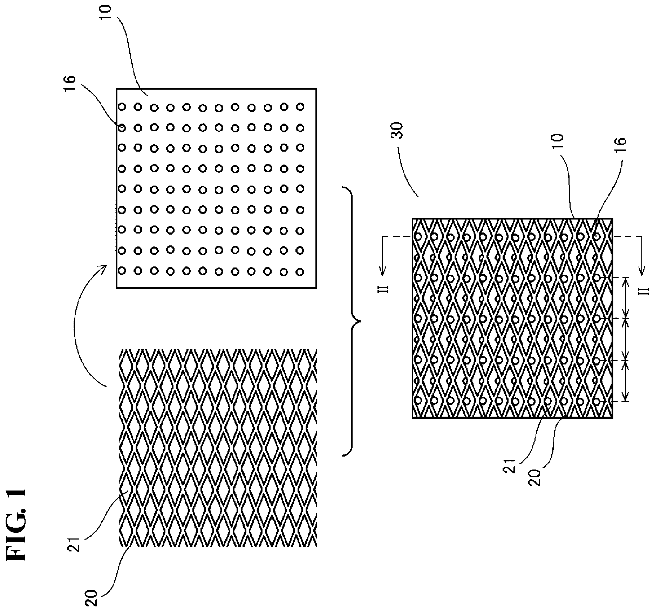

Hereinafter, each configuration of the electrode according to the embodiment of the present disclosure will be described with reference to the drawings as needed. FIG. 1 schematically shows an example of electrode 30 according to the embodiment of the present disclosure. As shown in FIG. 1, electrode 30 includes a metal porous-body sheet 10 and a plate-shaped metallic support body 20. Metallic support body 20 is disposed on one main surface of metal porous-body sheet 10.

Metal porous-body sheet 10 is formed of a metal porous body having a skeleton with a three-dimensional network structure and a pore portion formed by the skeleton. The one main surface of metal porous-body sheet 10, which is in contact with metallic support body 20, is provided with a plurality of machined holes 16 formed perpendicular to the one main surface. Although the plurality of machined holes 16 are disposed at equal intervals, all of the plurality of machined holes 16 may be disposed at equal intervals, or some of the plurality of machined holes 16 may be disposed at equal intervals. In addition, the plurality of machined holes 16 are partial recesses or penetrations formed in the one main surface of the metal porous-body sheet, and are different from the pore portion which is a constituent element of metal porous-body sheet 10.

Machined holes 16 may extend through two surfaces of metal porous-body sheet 10. Since the plurality of machined holes 16 are formed so as to extend through the two surfaces of metal porous-body sheet 10, more bubbles can be rapidly discharged from electrode 30 through machined holes 16. Since many bubbles are rapidly discharged from electrode 30 during water electrolysis, a larger portion of metal porous-body sheet 10 used for electrode 30 can contribute to the electrolytic reaction. That is, the advantage of the large surface area of metal porous-body sheet 10 can be utilized.

Machined holes 16 may have any shape, and may have a circular shape, an elliptical shape, or a polygonal shape. The diameter of machined holes 16 is not particularly limited, but as an example, a maximum diameter of machined holes 16 may be 0.5 mm to 3.5 mm, may be 0.7 mm to 3.0 mm, or may be 0.8 mm to 2.7 mm.

Metallic support body 20 is provided with a plurality of through holes 21 extending through the two surfaces of the metallic support body. In the example shown in FIG. 1, metallic support body 20 is made of an expand metal, and has a shape in which rhombic through holes 21 are continuously disposed in a staggered pattern.

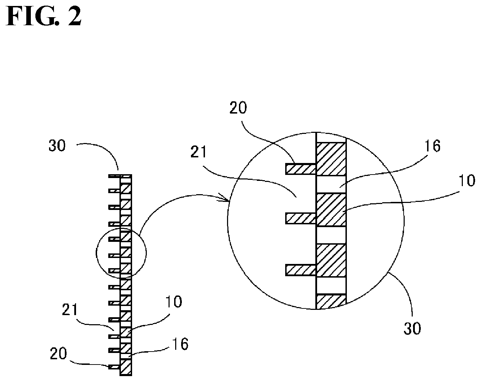

As described above, metallic support body 20 is disposed on the main surface of metal porous-body sheet 10 where the plurality of machined holes 16 are formed. Electrode 30 shown in FIG. 1 has a structure in which metallic support body 20 is disposed in front of metal porous-body sheet 10 on the plane of the paper. FIG. 2 is a cross-sectional view of electrode 30 taken along line II-II in FIG. 1. As shown in FIG. 1 and FIG. 2, metal porous-body sheet 10 and metallic support body 20 are disposed such that the center of each of at least some of the plurality of machined holes 16 of metal porous-body sheet 10 and the center of each of at least some of the plurality of through holes 21 of metallic support body 20 of are shifted from each other in one direction in plan view. In addition, the center of each of the at least some of the plurality of machined holes 16 of metal porous-body sheet 10 is disposed so as to be present inside each of the at least some of the plurality of through holes 21 of metallic support body 20 in plan view. In the water electrolysis apparatus, electrode 30 may be disposed and used so that the center of each of machined holes 16 seen from each of through holes 21 is positioned above the center of each of through holes 21 in a direction of gravity. The expression of "being positioned above" means that the center of each of machined holes 16 and the center of each of through holes 21 is shifted from each other in a vertical direction when electrode 30 is viewed from the main surface on a side of metallic support body 20 (that is, the state as shown in FIG. 1). In addition, the vertical direction refers to the direction of gravity when water electrolysis is performed using electrode 30.

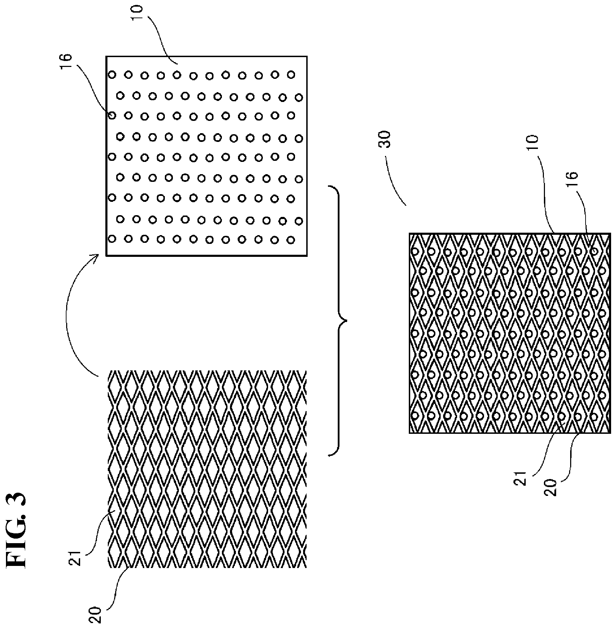

In electrode 30 according to the embodiment of the present disclosure, as shown in FIG. 1, the center of each of the at least some of the plurality of machined holes 16 is positioned above the center of each of the some of the plurality of through holes 21. For example, in electrode 30 shown in FIG. 1, the center of each of machined holes 16 in a row adjacent to a row of machined holes 16 each positioned above the center of each of through holes 21 is not positioned above the center of each of through holes 21. However, in order to more quickly discharge bubbles generated during water electrolysis, the center of each of all of machined holes 16 may be positioned above the center of each of through holes 21 as in electrode 30 shown in FIG. 3.

A diameter of machined holes 16 is not particularly limited, and may be appropriately selected in accordance with the size of through holes 21. For example, the diameter of machined holes 16 may be smaller than the diameter of through holes 21 in a vertical direction.

The number of the plurality of machined holes 16 is not particularly limited, and may be appropriately selected in accordance with the number of the plurality of through holes 21. For example, the number of the plurality of machined holes 16 may be 1/3 times to 4 times the number of the plurality of through holes 16, or the number of the plurality of machined holes 16 may be equal to the number of the plurality of through holes 16.

In electrode 30 according to the embodiment of the present disclosure, a ratio of a sum of areas of the plurality of machined holes 16 to a total area of the main surface of metal porous-body sheet 10 (hereinafter, referred to as an "aperture ratio") may be 5% to 35%. The aperture ratio can be calculated by the following equation: "the total area of the main surface of metal porous-body sheet 10"/"the sum of the areas of the plurality of machined holes 16" × 100.

When the aperture ratio of metal porous-body sheet 10 is increased, the discharge performance of bubbles generated when electrode 30 is used for water electrolysis can be increased, and the electrolysis voltage can be decreased. On the other hand, when the aperture ratio of metal porous-body sheet 10 is too large, the surface area of metal porous-body sheet 10 is reduced, and the reactivity of electrode 30 may be deteriorated. Thus, the aperture ratio of metal porous-body sheet 10 may be 5% to 35%, 7% to 32%, or 10% to 30%.

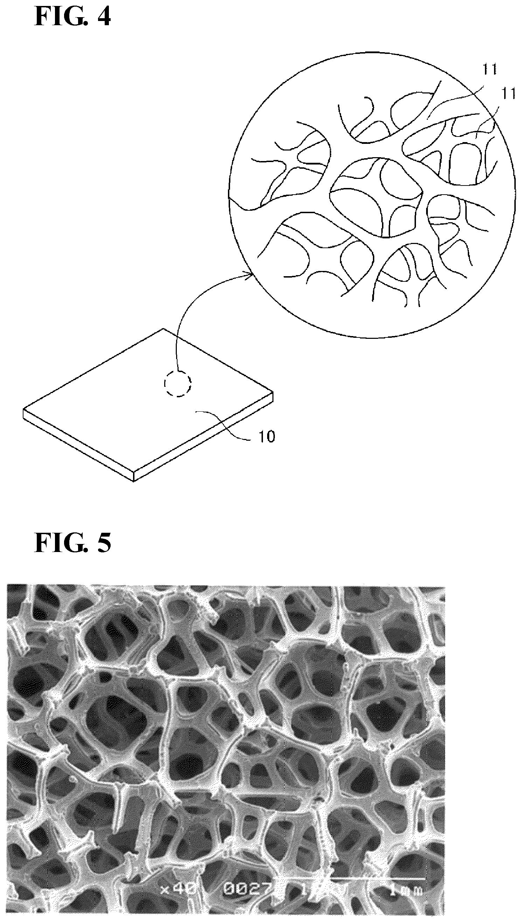

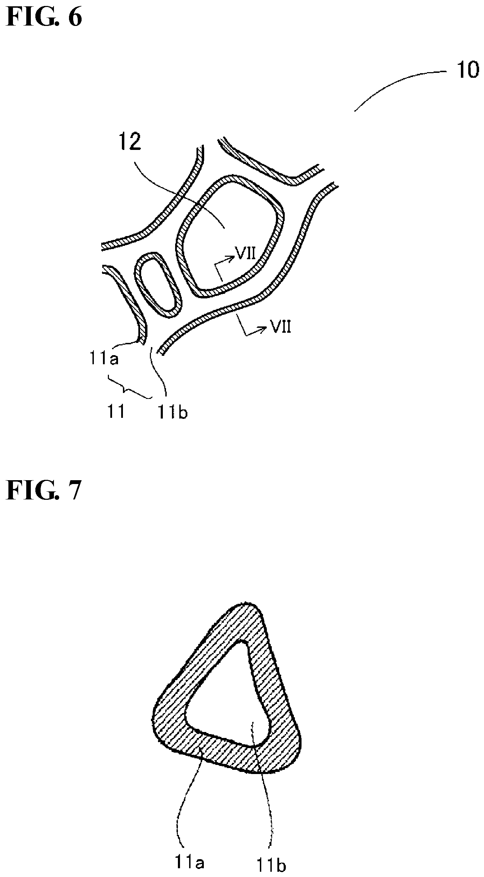

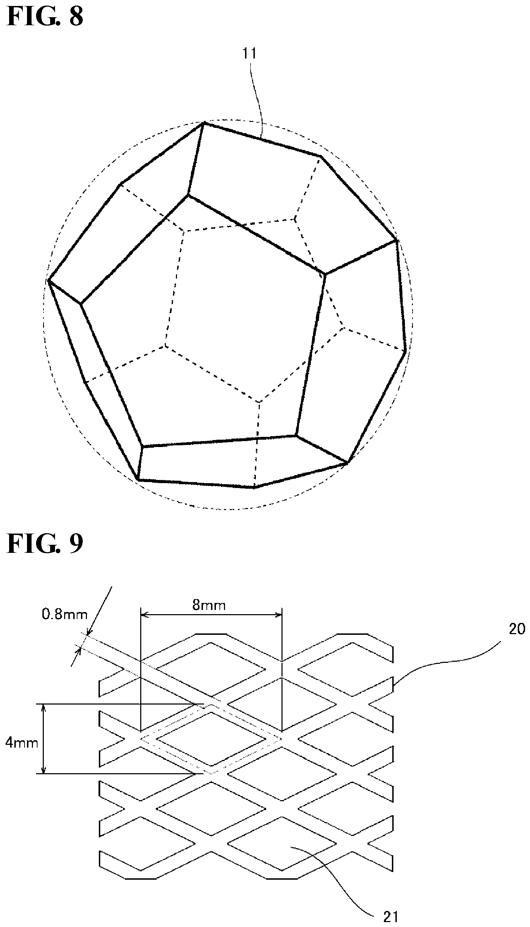

As described above, metal porous-body sheet 10 is formed of a metal porous body having a skeleton with a three-dimensional network structure. FIG. 4 schematically shows an example of metal porous-body sheet 10. As shown in FIG. 4, metal porous-body sheet 10 has a sheet-like shape. FIG. 5 shows a cross-sectional photograph of an example of metal porous-body sheet 10. FIG. 6 schematically shows an inner portion structure of an example of metal porous-body sheet 10. FIG. 7 shows a schematic cross-sectional view of metal porous-body sheet 10 taken along line VII-VII in FIG. 6. FIG. 8 shows a schematic view of a unit cell structure of the metal porous body defined by a skeleton 11 of metal porous-body sheet 10.

As shown in FIG. 6 and FIG. 7, skeleton 11 of metal porous-body sheet 10 is typically constituted by a skeleton body 11a made of a metal or an alloy, and an inner portion 1 1b of skeleton 11 is hollow. That is, skeleton 11 has skeleton body 11a and inner portion 11b defined by skeleton body 11a. Thus, skeleton 11 has a hollow cylindrical shape. Skeleton body 11a has a triangular shape in a cross-sectional view intersecting an extending direction (refer to FIG. 7). The triangular shape need not be a mathematically exact triangular shape. Skeleton 11 may be solid. Furthermore, pore portion 12 formed by skeleton 11 is an interconnected pore formed by connecting the cells (refer to FIG. 8) modeled as a regular dodecahedron from the surface to the inner portion of metal porous-body sheet 10. The diameter of the circumscribed sphere of the dodecahedral structure (shown by the one-dot chain line in FIG. 8) is regarded as a pore diameter of pore portion 12 in the metal porous body. The average value of the pore diameters of the pore portions in the metal porous body is referred to as an average pore diameter.

The average pore diameter of metal porous-body sheet 10 is not particularly limited, and may be appropriately changed in accordance with the size of bubbles generated when water electrolysis is performed using electrode 30. The average pore diameter of metal porous-body sheet 10 may be, for example, 400 $\mu$m to 1000 $\mu$m, 500 $\mu$m to 850 $\mu$m in another embodiment, and 600 $\mu$m to 850 $\mu$m in still another embodiment.

The average pore diameter of metal porous-body sheet 10 is calculated by the following Formula [1] after observing at least 10 fields of view of the main surface of metal porous-body sheet 10 with a microscope or the like and determining an average number (nc) of pore portions 12 per inch (25.4 mm = 25400 $\mu$m).

$$\text{Average pore diameter} = 25400 \ \mu m/nc \qquad \text{Formula [1]}$$

The number of pore portions 12 is measured in accordance with the method for determining the number of pores (number of cells) of flexible cellular polymeric materials according to JIS K6400-1:2004 Annex 1 (informative) (except for the specification of the dimensions of the test piece).

A porosity of metal porous-body sheet 10 may be, for example, 70% to 98%, 80% to 98%, or 90% to 98%. The porosity of metal porous-body sheet 10 can be adjusted by, for example, a method of rolling the metal porous-body sheet. The porosity of metal porous-body sheet 10 is defined by the following Formula [1]. However, the volume of machined holes 16 is not included in Vp.

$$\text{Porosity (\%)} = [1 - \{Mp/(Vp \times dp)\}] \times 100 \qquad \text{Formula [1]}$$

Mp: Mass [g] of metal porous-body sheet
Vp: Volume [cm$^3$] determined by external shape of metal porous-body sheet
dp: Density of metal constituting metal porous-body sheet [g / cm$^3$]

A thickness of metal porous-body sheet 10 may be appropriately selected in accordance with the size of electrode 30. For example, the thickness of metal porous-body sheet 10 may be 0.5 mm to 2.0 mm. The thicknesses of metal porous-body sheet 10 can be measured with a digital thickness gauge, for example.

Skeleton body 11a is formed of a metal material. The metal material is any metal material as long as it is stable to an aqueous solution used in water electrolysis. Examples of such a metal material include nickel (Ni) and nickel alloy. An example of the nickel alloy includes an alloy containing nickel (Ni) as a main component and cobalt (Co) or zinc (Zn) as an additive component in which these components are alloyed. In skeleton 11, the expression of "containing nickel as a main component" means that nickel is the most abundant component in skeleton 11.

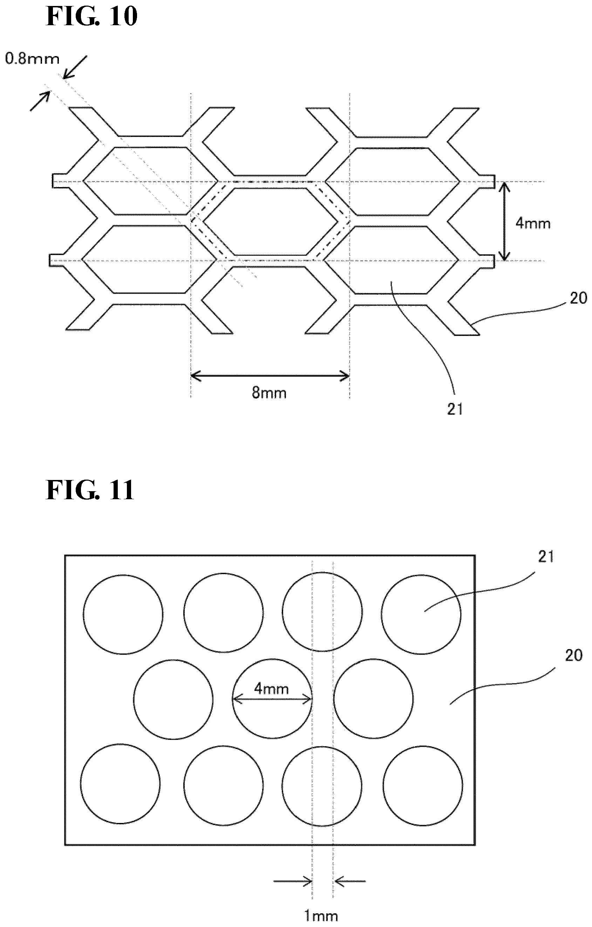

Metallic support body 20 is any metallic support body as long as it has a plurality of through holes 21 extending through two surfaces of metallic support body 20, and for example, an expand metal or a punching metal may be preferably used. FIG. 9 and FIG. 10 show examples of the structures of metallic support body 20 which is made of an expand metal. FIG. 11 to FIG. 13 show examples of the structures of metallic support body 20 which is made of a punching metal.

Metallic support body 20 shown in FIG. 9 continuously has rhombic through holes 21 in a staggered pattern, and is constituted by strands around through holes 21. As an example, a thickness of the strands is 0.8 mm. In the example of metallic support body 20 shown in FIG. 9, the rhombus constituting each of through holes 21 is horizontally long, the diagonal in a lateral direction is about 8 mm, and the diagonal in the vertical direction is about 4 mm. In a case where metallic support body 20 is used for electrode 30, for example, when the diameter of machined holes 16 formed in metal porous-body sheet 10 is about 2 mm, machined holes 16 can be disposed at the upper half positions of the diagonal lines in the vertical direction of through holes 21.

Metallic support body 20 shown in FIG. 10 continuously has hexagonal through holes 21 in a staggered pattern, and is constituted by strands around through holes 21. As in metallic support body 20 shown in FIG. 9, the thickness of the strands is 0.8 mm. In the example of metallic support body 20 shown in FIG. 10, the hexagon constituting each of through holes 21 is horizontally long, the diagonal in the lateral direction is about 8 mm, and the distance between two sides extending in the lateral direction is about 4 mm. In a case where metallic support body 20 is used for electrode 30, as in the case of metallic support body 20 shown in FIG. 9, for example, when the diameter of machined holes 16 formed in metal porous-body sheet 10 is about 2 mm, machined holes 16 can be disposed at positions above the diagonal line in the lateral direction of through holes 21.

Metallic support body 20 shown in FIG. 11 is a metallic plate in which circular through holes 21 having a diameter of 4 mm are formed in a staggered pattern. The distance between the centers of through holes 21 adjacent to each other in the lateral direction is about 5 mm. That is, through holes 21 are formed so that the metallic portion is approximately 1 mm long. In a case where metallic support body 20 is used for electrode 30, for example, when the diameter of machined holes 16 formed in metal porous-body sheet 10 is about 2 mm, machined holes 16 can be disposed at the upper half positions of the diameters of through holes 21 in the vertical direction.

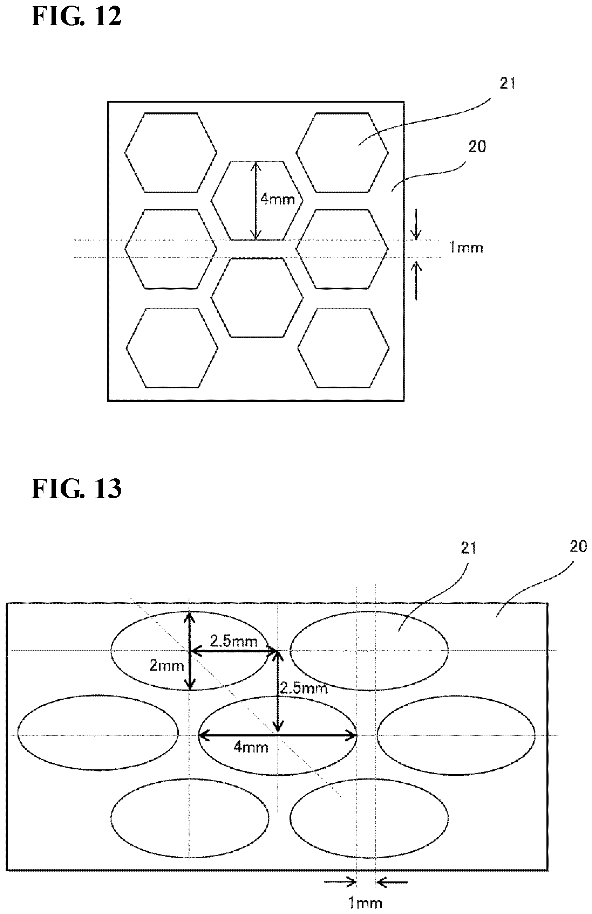

In metallic support body 20 shown in FIG. 12, hexagonal through holes 21 are formed in a metal plate in a staggered pattern. The distance between two sides extending in the lateral direction of through holes 21 is about 4 mm, and the metallic portion having a length of about 1 mm is present between through holes 21 adjacent to each other in the vertical direction. In a case where metallic support body 20 is used for electrode 30, for example, when the diameter of machined holes 16 formed in metal porous-body sheet 10 is about 2 mm, machined holes 16 can be disposed at positions above the diagonal line in the lateral direction of through holes 21.

In metallic support body 20 shown in FIG. 13, elliptical through holes 21 are formed in a metal plate in a staggered pattern. A major axis of the ellipse is 4 mm, and a minor axis of the ellipse is 2 mm. The metallic portion having a length of 1 mm is present between through holes 21 adjacent to each other in the lateral direction. Furthermore, the centers of through holes 21 adjacent to each other in an oblique direction are shifted from each other by 2.5 mm in both the lateral direction and the vertical direction. In a case where metallic support body 20 is used for electrode 30, for example, when the diameter of machined holes 16 formed in metal porous-body sheet 10 is about 2 mm, machined holes 16 can be disposed at the upper half positions of the minor axes of through holes 21 in the vertical direction.

Metallic support body 20 is any metallic support body as long as it is stable to an aqueous solution used in water electrolysis. For example, the surface of metal support body 20 may be made of nickel or a nickel alloy. An example of metallic support body 20 whose surface is made of nickel or a nickel alloy includes, for example, a metallic support body whose surface is plated with nickel or a nickel alloy. An example of the nickel alloy includes an alloy containing nickel (Ni) as a main component and cobalt (Co) or zinc (Zn) as an additive component in which these components are alloyed, as in metal porous-body sheet 10. The expression of containing nickel as a main component means that nickel is the most abundant component in the nickel alloy.

<Water Electrolysis Apparatus >

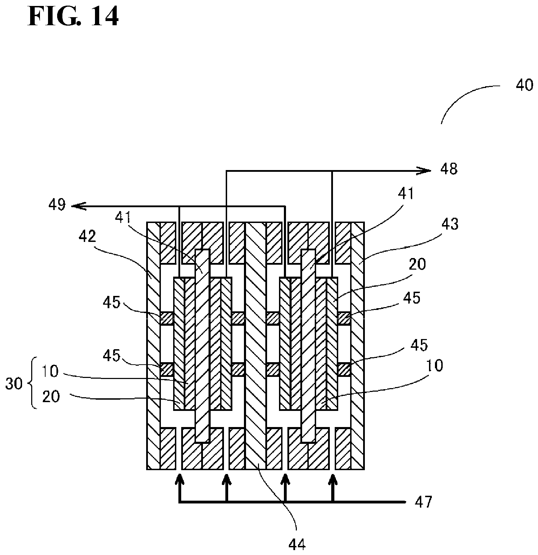

A water electrolysis apparatus according to the embodiment of the present disclosure includes electrode 30 according to the embodiment of the present disclosure. Hereinafter, a configuration of a water electrolysis apparatus according to the embodiment of the present disclosure will be described with reference to the drawings as needed. FIG. 14 shows a schematic view of an example of a water electrolysis apparatus 40 according to the embodiment of the present disclosure. Water electrolysis apparatus 40 is an apparatus for generating, for example, hydrogen gas ($H_2$) and oxygen-gas ($O_2$). The up-and-down direction on the plane of the paper of FIG. 14 corresponds to the direction of gravity.

As shown in FIG. 14, water electrolysis apparatus 40 has electrodes 30 on both sides of a diaphragm 41. Each of electrodes 30 is constituted by metal porous-body sheet 10 and metallic support body 20 as described above, and is disposed so that the main surface of metal porous-body sheet 10 is in contact with diaphragm 41. Each of electrodes 30 is electrically connected to a negative electrode 42, a positive electrode 43, or a bipolar plate 44 via a plate member 45.

Plate member 45 can maintain a space for facilitating discharge of bubbles (gas) generated by water electrolysis. In this space, convection of an aqueous solution occurs. As plate member 45, for example, a plate spring can be used.

Water electrolysis apparatus 40 shown in FIG. 14 is formed by electrically connecting two unit cells. The water electrolysis apparatus according to the embodiment of the present disclosure is not limited to this configuration, and more unit cells may be electrically connected.

Electrode 30 disposed between diaphragm 41 and negative electrode 42 is a hydrogen evolution electrode. On the other hand, electrode 30 disposed between diaphragm 41 and positive electrode 43 is an oxygen evolution electrode. Electrode 30 according to the embodiment of the present disclosure is used for at least one of the hydrogen evolution electrode or the oxygen evolution electrode. Both the hydrogen evolution electrode and the oxygen evolution electrode may be electrodes 30 according to the embodiments of the present disclosure.

Diaphragm 41 allows hydrogen ions ($H^+$) or hydroxide ions ($OH^-$) to permeate therethrough. Diaphragm 41 which has low gas permeability and low electron conductivity is used. As diaphragm 41, for example, an ion exchange membrane, a porous diaphragm, or a cloth is used. Diaphragm 41 may be a film formed of, for example, a hydrophilic polyethylene nonwoven fabric.

In water electrolysis apparatus 40 shown in FIG. 14, an alkaline aqueous solution 47 is supplied from below as indicated by the arrows. Thus, alkaline aqueous solution 47 as an electrolyte is filled in each of spaces partitioned by diaphragm 41 and negative electrode 42, diaphragm 41 and bipolar plate 44, and diaphragm 41 and positive electrode 43. As alkaline aqueous solution 47, for example, a potassium hydroxide aqueous solution (KOH) may be used.

During operation of water electrolysis apparatus 40, a voltage is applied to negative electrode 42 and positive electrode 43. As a result, water in the alkaline aqueous solution is reduced at electrodes 30 on a side of negative electrode 42, and hydrogen gas 49 is generated. Hydrogen gas 49 generated at electrodes 30 is discharged together with the alkaline aqueous solution as indicated by the arrows in the figure. In addition, at this time, hydroxide ions in the alkaline aqueous solution permeate through diaphragm 41 and move from electrodes 30 on the side of negative electrode 42 toward positive electrode 43.

The hydroxide ions moving toward positive electrode 43 are oxidized at electrodes 30 on the side of the positive electrode. As a result, oxygen gas 48 is generated at electrodes 30 on the side of positive electrode 43. Oxygen gas 48 generated at electrodes 30 on the side of positive electrode 43 is discharged together with the alkaline aqueous solution as indicated by the arrows in the figure. As such a reaction continues, water electrolysis apparatus 40 generates hydrogen gas and oxygen gas.

Water electrolysis apparatus 40 may be an apparatus for generating chlorine gas (Ch), hydrogen gas, and a sodium hydroxide (NaOH) aqueous solution. In this case, a sodium chloride (NaCl) aqueous solution is used as an electrolyte.

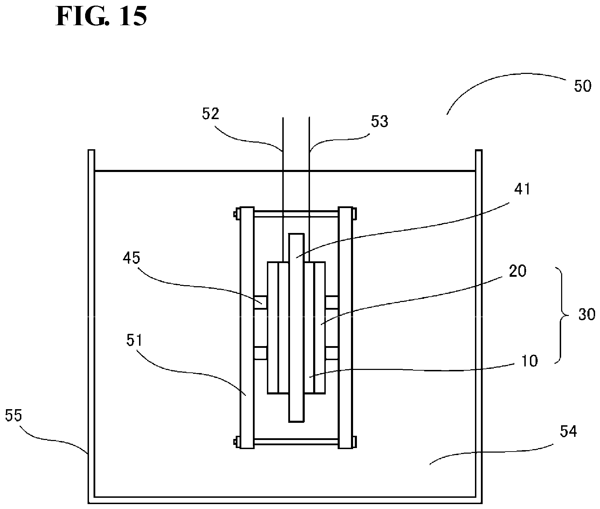

FIG. 15 schematically shows an example of a simplified water electrolysis apparatus 50 according to the embodiment of the present disclosure. Simplified water electrolysis apparatus 50 is an apparatus for generating, for example, a hydrogen gas ($H_2$) and oxygen-gas ($O_2$). The up-and-down direction on the plane of the paper of FIG. 15 corresponds to the direction of gravity. As shown in FIG. 15, simplified water electrolysis apparatus 50 includes electrodes 30, diaphragm 41, plates 51, plate members 45, a negative-electrode connection line 52, a positive-electrode connection line 53, and a container 55. A potassium hydroxide solution is stored as an electrolyte 54 in container 55. Electrodes 30, diaphragm 41, plates 51 and plate members 45 are immersed in electrolyte 54. Each of electrodes 30 is an electrode according to the embodiment of the present disclosure described above, and is constituted by metal porous-body sheet 10 and metallic support body 20. In each of electrodes 30, metal porous-body sheet 10 is in contact with diaphragm 41, and metallic support body 20 is positioned closer to each of plates 51. Plates 51 are formed of, for example, a resin material.

Plate members 45 are disposed between plates 51 and metallic support bodies 20 included in electrodes 30. As plate members 45, for example, plate springs can be used. Plates 51 that sandwich diaphragm 41 and are disposed on both sides of diaphragm 41 are fixed to each other by, for example, screwing. As a result, metal porous-body sheet 10 included in each of electrodes 30 is pressed against diaphragm 41. Negative-electrode connection line 52 is electrically connected to metal porous-body sheet 10 included in one of electrodes 30. Positive-electrode connection line 53 is electrically connected to metal porous-body sheet 10 located opposite to metal porous-body sheet 10, to which negative-electrode connection line 52 is connected, with respect to diaphragm 41. Negative-electrode connection line 52 and positive-electrode connection line 53 are electrically connected to a power source (not shown) outside simplified water electrolysis apparatus 50. Negative-electrode connection line 52 and positive-electrode connection line 53 are formed of, for example, platinum (Pt).

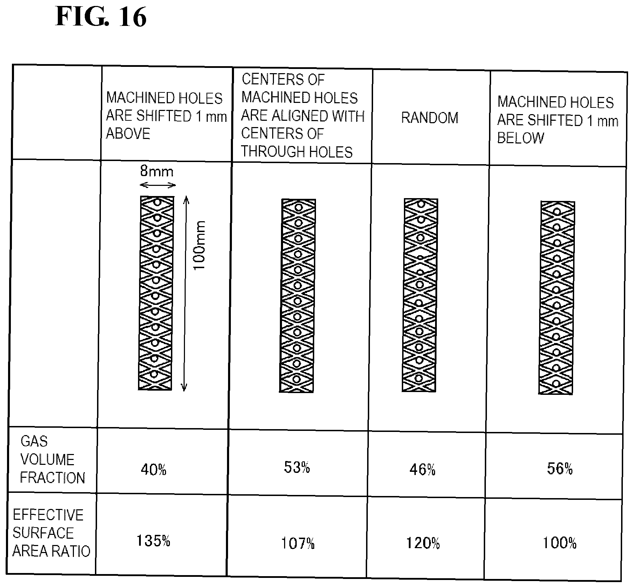

In simplified water electrolysis apparatus 50 shown in FIG. 15, the volume fraction of hydrogen gas generated at electrodes 30 was determined by simulation. Each of electrodes 30 had a configuration in which metallic support body 20 shown in FIG. 9 was combined with metal porous-body sheet 10 provided with machined holes 16 which extended through metal porous-body sheet 10 and had a diameter of 2.0 mm (aperture ratio: 19%). In the CAE model, the width of through hole 21 was 8 mm, and the length of electrode 30 in the vertical direction was 100 mm. As shown in FIG. 16, the simulations were performed by changing the positional relationship between machined holes 16 and through holes 21.

The positional relationship between machined holes 16 and through holes 21 was set to the following four cases (1) to (4). (1) The center of each of machined holes 16 was shifted 1 mm above the center of each of through holes 21. (2) The center of each of machined holes 16 was aligned with the center of each of through holes 21. (3) The center of each of machined holes 16 was shifted at random from the center of each of through holes 21. (4) The center of each of machined holes 16 was shifted 1 mm below the center of each of through holes 21.

As a result, as shown in FIG. 16, it was found that the electrode according to the embodiment of the present disclosure in which the center of each of machined holes 16 were shifted 1 mm above the center of each of through holes 21, which is the type (1) above, had the lowest gas volume fraction of 40%, and the bubbles were rapidly discharged. Furthermore, the effective surface area ratio was the highest at 135%. The effective surface area ratio was calculated as a relative value, taking the effective surface area ratio of the metal porous-body sheet without machined holes 16 as 100%.

The simulation results when the diameter of machined holes 16 was changed to 1.5 mm (aperture ratio: 11%) are shown in Table 1 below.

[Table 1]

|  | Electrode where machined holes are shifted 1 mm above | Electrode where centers of machined holes are aligned with centers of through holes | Electrode where machined holes are not formed |
|---|---|---|---|
| Gas volume fraction | 46% | 54% | 64% |
| Effective surface area ratio | 134% | 114% | 100% |

As shown in Table 1, even when the diameter of machined holes 16 was 1.5 mm, the electrode according to the embodiment of the present disclosure in which the center of each of machined holes 16 were shifted 1 mm above the center of each of through holes 21 had the lowest gas volume fraction of 46% and the highest effective surface area ratio of 134%.

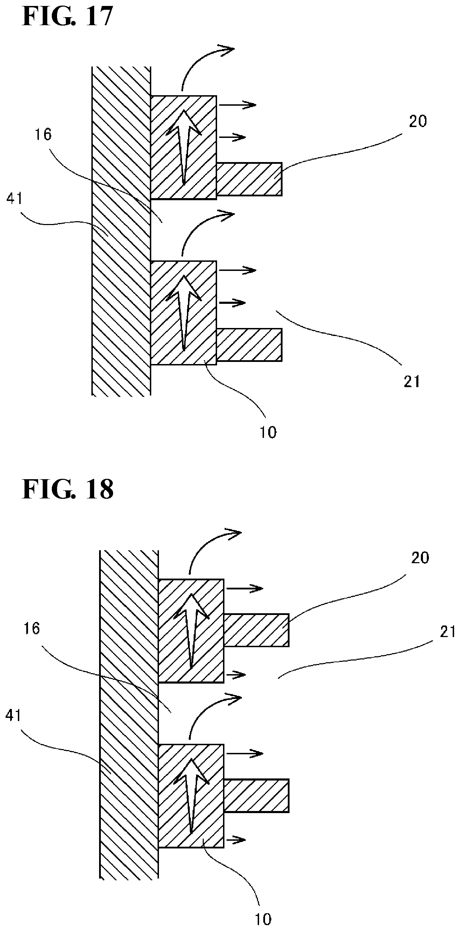

The results are considered as follows. First, FIG. 17 is a schematic view showing a partial section of electrode 30 in the case where the center of each of machined holes 16 are shifted above the center of each of through holes 21. In the electrode shown in FIG. 17, bubbles (gas) generated in metal porous-body sheet 10 cannot permeate through diaphragm 41, and thus, the bubbles move upward in the direction of gravity or toward metallic support body 20 through pore portion 12 of metal porous-body sheet 10. At this time, the bubbles moving from below in the direction of gravity gather above metal porous-body sheet 10 in the direction of gravity, and many bubbles are discharged into machined holes 16 or through holes 21 as indicated by arrows in the figure. That is, in a portion where the discharge of bubbles is blocked by the contact with metallic support body 20, the bubbles generated in metal porous-body sheet 10 are not so many, and thus, the influence of blocking the discharge toward metallic support body 20 is small. Thus, it is considered that electrode 30 according to the embodiment of the present disclosure has a high bubble discharge property.

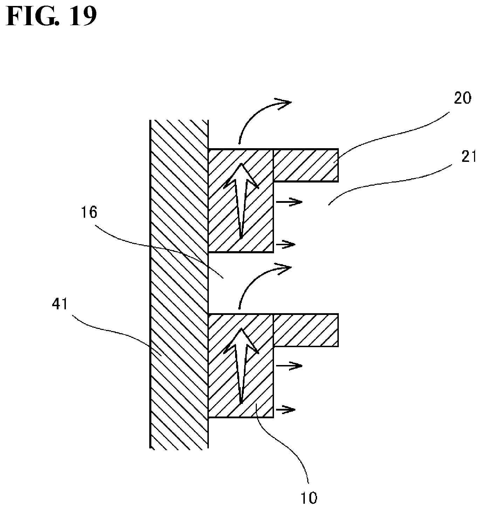

Next, FIG. 18 shows a schematic view of a partial cross section of the electrode in the case where the center of each of machined holes 16 is aligned with the center of each of through holes 21. FIG. 19 is a schematic view of a partial cross section of the electrode in the case where the center of each of machined holes 16 is shifted below the center of each of through holes 21. In the case of the electrode shown in FIG. 18, the discharge of bubbles is blocked by metallic support body 20 at a portion where the bubbles moving from below in the direction of gravity gather to a medium extent. In the case of the electrode shown in FIG. 19, the discharge of bubbles is blocked by metallic support body 20 at a portion where many bubbles moving from below in the direction of gravity gather. As described above, it is considered that the influence of blocking the discharge of bubbles by metallic support body 20 is large for the electrodes shown in FIG. 18 and FIG. 19, resulting in a large gas volume fraction and a small effective surface area ratio.

[Example]

The present disclosure will be described in more detail below based on examples. However, these examples are merely illustrative, and the electrode and the water electrolysis apparatus of the present disclosure are not limited thereto. The scope of the present disclosure is defined by the appended claims, and includes all modifications within the meaning and scope equivalent to the claims.

[Example 1]

As metal porous-body sheet 10, Celmet #8 (Celmet is a trade name) made of nickel manufactured by Sumitomo Electric Industries, Ltd. was prepared. The size of the metal porous-body sheet was 50 mm in width (horizontal) and 120 mm in length (vertical). Prepared metal porous-body sheet 10 having an average pore diameter of 450 $\mu$m, a porosity of 97%, and a thickness of 1.2 mm was rolled to a thickness of 0.5 mm, and then machined holes 16 (holes extending through metal porous-body sheet 10 in a thickness direction) having a diameter of 1.5 mm were formed in metal porous-body sheet 10 in a staggered pattern. As a result, the aperture ratio of metal porous-body sheet 10 was 11%, and the porosity thereof was 93%. As metallic support body 20, the expand metal shown in FIG. 9 was prepared. As shown in FIG. 2, the Cermet and the expand metal were disposed such that the center of each of machined holes 16 was shifted 1mm above the center of each of through holes 21, thereby forming an electrode No. 1.

[Comparative Example 1]

A metal mesh (50 mesh) made of nickel was prepared as a metal porous-body sheet. The metallic mesh used had a wire diameter of 0.15 mm, and was manufactured by The Nilaco Corporation. This metallic mesh was combined with the expand metal (metallic support body 20) used in Example 1 to form electrode No. 2.

[Comparative Example 2]

As a metal porous-body sheet, Celmet #8 (Celmet is a trade name) made of nickel manufactured by Sumitomo Electric Industries, Ltd. was prepared. The metal porous-body sheet having an average pore diameter of 450 $\mu$m, a porosity of 97%, and a thickness of 1.2 mm was rolled to a thickness of 0.5 mm to obtain a metal porous-body sheet having a porosity of 92%, and the obtained metal porous-body sheet was used. This metal porous-body sheet was combined with the expand metal (metallic support body 20) used in Example 1 to form electrode No. 3. Machined holes 16 were not formed.

[Comparative Example 3]

An electrode No. 4 was formed in the same manner as in Example 1 except that the center of each of machined holes 16 was aligned with the centers of through holes 21.

[Comparative Example 4]

An electrode No. 5 was formed in the same manner as in Example 1 except that the center of each of machined holes 16 was shifted 1 mm below the center of each of through holes 21 by a portion.

(Evaluation)

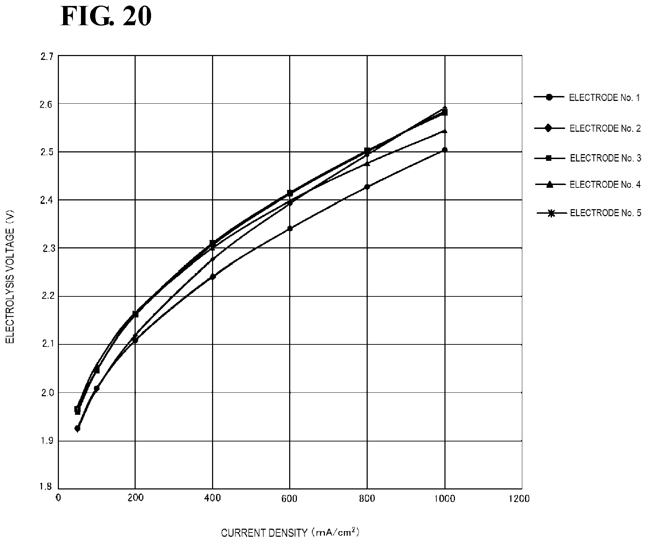

Water electrolysis was performed using the electrodes No. 1 to No. 5 prepared in Example 1 and Comparative Examples 1 to 4. The water electrolysis experiments were conducted using simplified water electrolysis apparatus 50 shown in FIG. 15. The aqueous solution used was a 7 mol% potassium hydrate aqueous solution. The temperature (at a cell supply inlet) of the electrolyte (aqueous solution) was 63°C. Zirfon Perl UTP500 manufactured by AGFA was used as diaphragm 41. The current was held for 5 minutes at each current value, and the electrolysis voltage was measured from the high current side. The results are shown in Table 2 and FIG. 20. In FIG. 20, a vertical axis represents a cell voltage (unit: V), and a horizontal axis represents a current density (unit: mA/cm$^2$).

[Table 2]

| Current density (mA/cm$^2$) | Electrolysis voltage (V) | | | | |
|---|---|---|---|---|---|
| | Electrode No. 1 | Electrode No. 2 | Electrode No. 3 | Electrode No. 4 | Electrode No. 5 |
| 1000 | 2.503 | 2.590 | 2.583 | 2.543 | 2.580 |
| 800 | 2.426 | 2.493 | 2.499 | 2.475 | 2.502 |
| 600 | 2.339 | 2.391 | 2.411 | 2.397 | 2.414 |
| 400 | 2.240 | 2.275 | 2.305 | 2.299 | 2.309 |

(continued)

| Current density (mA/cm$^2$) | Electrolysis voltage (V) | | | | |
|---|---|---|---|---|---|
| | Electrode No. 1 | Electrode No. 2 | Electrode No. 3 | Electrode No. 4 | Electrode No. 5 |
| 200 | 2.108 | 2.119 | 2.161 | 2.165 | 2.162 |
| 100 | 2.009 | 2.006 | 2.045 | 2.057 | 2.046 |
| 50 | 1.926 | 1.923 | 1.958 | 1.970 | 1.966 |

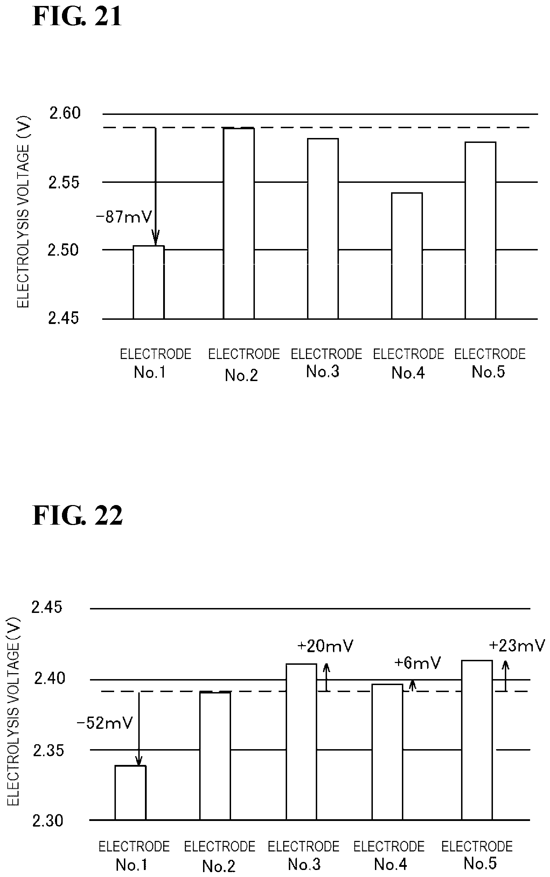

In addition, electrolysis voltages (V) at a current density of 1000 mA/cm$^2$ are shown in Table 3 and FIG. 21. The electrolysis voltages (V) at a current density of 600 mA/cm$^2$ are shown in Table 3 and FIG. 22.

[Table 3]

| Current density (mA/cm$^2$) | Electrolysis voltage (V) | | | | |
|---|---|---|---|---|---|
| | Electrode No. 1 | Electrode No. 2 | Electrode No. 3 | Electrode No. 4 | Electrode No. 5 |
| 1000 | 2.503 | 2.590 | 2.583 | 2.543 | 2.580 |
| 600 | 2.339 | 2.391 | 2.411 | 2.397 | 2.414 |

As shown in Table 2 and Table 3 and FIG. 20 to FIG. 22, when electrode 30 (electrode No. 1) according to the embodiment of the present disclosure was used, the electrolysis voltage was able to be reduced. This is because the bubbles generated at the electrode can be efficiently discharged as described above, and the electrode has high reactivity.

REFERENCE SIGNS LIST

10 metal porous-body sheet
11 skeleton
11a skeleton body
11b inner portion
12 pore portion
16 machined hole
20 metallic support body
21 through hole
30 electrode
40 water electrolysis apparatus
41 diaphragm
42 negative electrode
43 positive electrode
44 bipolar plate
45 plate member
50 simplified water electrolysis apparatus
51 plate
52 negative-electrode connection line
53 positive-electrode connection line
54 electrolyte
55 container

**Claims**

1. An electrode comprising:

a metal porous-body sheet formed of a metal porous body having a skeleton, the skeleton having a three-dimensional network structure; and

a metallic support body having a plate shape and disposed on one main surface of the metal porous-body sheet, wherein the one main surface has a plurality of machined holes each formed perpendicularly to the one main surface, and at least some of the plurality of machined holes are disposed at equal intervals,

wherein the metallic support body has a plurality of through holes extending between two surfaces of the metallic support body, and at least some of the plurality of through holes are disposed at equal intervals, and

wherein the metal porous-body sheet and the metallic support body are disposed such that

a center of each of the some of the plurality of machined holes and a center of each of the some of the plurality of through holes are shifted from each other in one direction in plan view.

2. The electrode according to claim 1,
wherein a maximum diameter of the plurality of machined holes is 0.5 mm to 3.5 mm.

3. The electrode according to claim 1 or claim 2,
wherein a number of the plurality of machined holes is 1/3 times to 4 times a number of the plurality of through holes.

4. The electrode according to any one of claim 1 to claim 3,
wherein the plurality of machined holes extend through two surfaces of the metal porous-body sheet.

5. The electrode according to any one of claim 1 to claim 4,

wherein the metal porous-body sheet and the metallic support body are disposed such that
a center of each of all of the plurality of machined holes and a center of each of all of the plurality of through holes are shifted from each other in one direction in plan view.

6. The electrode according to any one of claim 1 to claim 5,
wherein an aperture ratio of the metal porous-body sheet is 5% to 35%.

7. The electrode according to any one of claim 1 to claim 6,
wherein the metallic support body is made of an expand metal or a punching metal.

8. The electrode according to any one of claim 1 to claim 7,
wherein a surface of the metal porous-body sheet is made of nickel or a nickel alloy.

9. The electrode according to any one of claim 1 to claim 8,
wherein a surface of the metallic support body is made of nickel or a nickel alloy.

10. A water electrolysis apparatus comprising:
the electrode according to any one of claim 1 to claim 9.

11. The water electrolysis apparatus according to claim 10,

wherein the metal porous-body sheet and the metallic support body are disposed such that
a center of each of the some of the plurality of machined holes is positioned above a center of each of the some of the plurality of through holes in a direction of gravity.

# FIG. 1

**FIG. 2**

## FIG. 3

## FIG. 4

## FIG. 5

**FIG. 6**

**FIG. 7**

## FIG. 8

## FIG. 9

## FIG. 10

0.8mm

4mm

8mm

20

21

## FIG. 11

21

20

4mm

1mm

## FIG. 12

## FIG. 13

# FIG. 14

# FIG. 15

# FIG. 16

| | MACHINED HOLES ARE SHIFTED 1 mm ABOVE | CENTERS OF MACHINED HOLES ARE ALIGNED WITH CENTERS OF THROUGH HOLES | RANDOM | MACHINED HOLES ARE SHIFTED 1 mm BELOW |
|---|---|---|---|---|
| | | | | |
| GAS VOLUME FRACTION | 40% | 53% | 46% | 56% |
| EFFECTIVE SURFACE AREA RATIO | 135% | 107% | 120% | 100% |

## FIG. 17

## FIG. 18

## FIG. 19

## FIG. 20

# FIG. 21

# FIG. 22

## INTERNATIONAL SEARCH REPORT

| International application No. |
|---|
| **PCT/JP2022/031982** |

**A. CLASSIFICATION OF SUBJECT MATTER**

*C25B 11/032*(2021.01)i; *C25B 1/04*(2021.01)i; *C25B 9/00*(2021.01)i; *C25B 9/23*(2021.01)i; *C25B 11/03*(2021.01)i; *C25B 11/046*(2021.01)i

FI: C25B11/032; C25B11/046; C25B1/04; C25B9/00 A; C25B9/23; C25B11/03

According to International Patent Classification (IPC) or to both national classification and IPC

**B. FIELDS SEARCHED**

Minimum documentation searched (classification system followed by classification symbols)

C25B1/00-15/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/153406 A1 (SUMITOMO ELECTRIC INDUSTRIES, LIMITED) 05 August 2021 (2021-08-05)<br>    paragraphs [0153]-[0165] | 1-11 |
| A | WO 2008/132818 A1 (MITSUI CHEMICALS, INCORPORATED) 06 November 2008 (2008-11-06) | 1-11 |
| A | JP 2007-536432 A (EILENBURGER ELEKTROLYSE- UND UMWELTTECHNIK GESELLSCHAFT MIT BESCHRANKTER HAFTUNG) 13 December 2007 (2007-12-13) | 1-11 |
| A | JP 2000-178778 A (OJI PAPER COMPANY, LIMITED) 27 June 2000 (2000-06-27) | 1-11 |
| A | JP 2011-246747 A (YOKOGAWA ELECTRIC CORPORATION) 08 December 2011 (2011-12-08) | 1-11 |
| A | WO 2016/042801 A1 (KABUSHIKI KAISHA TOSHIBA) 24 March 2016 (2016-03-24) | 1-11 |
| A | US 4722773 A (THE DOW CHEMICAL COMPANY) 02 February 1988 (1988-02-02) | 1-11 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/031982**

| Patent document cited in search report | | | Publication date (day/month/year) | Patent family member(s) | | | Publication date (day/month/year) |
|---|---|---|---|---|---|---|---|
| WO | 2021/153406 | A1 | 05 August 2021 | (Family: none) | | | |
| WO | 2008/132818 | A1 | 06 November 2008 | US | 2010/0126875 | A1 | |
| | | | | TW | 200907111 | A | |
| JP | 2007-536432 | A | 13 December 2007 | US | 2008/0245662 | A1 | |
| | | | | WO | 2005/111271 | A1 | |
| | | | | EP | 1747304 | A1 | |
| | | | | DE | 102004023161 | A | |
| | | | | CN | 1950546 | A | |
| | | | | TW | 200606281 | A | |
| JP | 2000-178778 | A | 27 June 2000 | (Family: none) | | | |
| JP | 2011-246747 | A | 08 December 2011 | (Family: none) | | | |
| WO | 2016/042801 | A1 | 24 March 2016 | US | 2016/0186335 | A1 | |
| | | | | CN | 106661743 | A | |
| US | 4722773 | A | 02 February 1988 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021211157 A
- JP 2005536639 A
- JP S6157397 B

- WO 2021153406 A
- JP 61057397 B